(19) Europäisches Patentamt
European Patent Office
Office européen des brevets

(11) Veröffentlichungsnummer: **0 522 314 A1**

(12) **EUROPÄISCHE PATENTANMELDUNG**

(21) Anmeldenummer: **92110019.4**

(22) Anmeldetag: **13.06.92**

(51) Int. Cl.[5]: **C08L 69/00**, //(C08L69/00, 51:04,25:12,23:02)

(30) Priorität: **03.07.91 DE 4121975**

(43) Veröffentlichungstag der Anmeldung:
**13.01.93 Patentblatt 93/02**

(84) Benannte Vertragsstaaten:
**BE DE FR GB NL**

(71) Anmelder: **BASF Aktiengesellschaft**
**Carl-Bosch-Strasse 38**
**W-6700 Ludwigshafen(DE)**

(72) Erfinder: **Niessner, Norbert, Dr.**
**Buhl'scher Hof 10**
**W-6701 Friedelsheim(DE)**
Erfinder: **Mühlbach, Klaus, Dr.**
**Im Zaunrücken 20**
**W-6718 Grünstadt(DE)**

(54) **Thermoplastische Formmassen auf der Basis von Polycarbonaten, Styrol/Acrylnitril-Polymerisaten und Polyolefinen.**

(57) Thermoplastische Formmassen, enthaltend als wesentliche Komponenten
A) Polycarbonate
B) Pfropfpolymerisate
C) Styrol-Copolymerisate
D) Polyolefine.



Rank Xerox (UK) Business Services

Die vorliegende Erfindung betrifft thermoplastische Formmassen, enthaltend als wesentliche Komponenten

A) 10 bis 88,9 Gew.-% mindestens eines Polycarbonats

B) 10 bis 50 Gew.-% mindestens eines Pfropfpolymerisats, aufgebaut aus

$b_1$) 40 bis 80 Gew.-% einer Pfropfgrundlage aus einem kautschukelastischen Polymeren auf Basis von Alkylacrylaten mit 1 bis 8 C-Atomen im Alkylrest und mit einer Glasübergangstemperatur von unter 10 °C

$b_2$) 20 bis 60 Gew.-% einer Pfropfauflage aus

$b_{21}$) 50 bis 95 Gew.-% Styrol oder substituierten Styrolen der allgemeinen Formel I

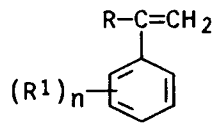

I

wobei R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat oder $C_1$- bis $C_8$-Alkyl(meth)acrylate oder deren Mischungen und

$b_{22}$) 5 bis 50 Gew.-% Acrylnitril, Methacrylnitril, $C_1$- bis $C_8$-Alkyl(meth)acrylate, Maleinsäureanhydrid, mit $C_1$- bis $C_8$-Alkyl- oder $C_6$- bis $C_{20}$-Arylgruppen N-substituierte Maleinsäureimide oder deren Mischungen

C) 1 bis 79,9 Gew.-% eines thermoplastischen Copolymerisats aus

$c_1$) 50 bis 95 Gew.-% Styrol oder substituierten Styrolen der allgemeinen Formel I oder $C_1$- bis $C_8$-Alkyl(meth)acrylate oder deren Mischungen

$c_2$) 5 bis 50 Gew.-% Acrylnitril, Methacrylnitril, $C_1$- bis $C_8$-Alkyl-(meth)acrylate, Maleinsäureanhydrid, mit $C_1$- bis $C_8$-Alkyl- oder $C_6$- bis $C_{20}$-Arylgruppen N-substituierte Maleinsäureimide oder deren Mischungen

D) 0,1 bis 40 Gew.-% mindestens eines Polyolefins

E) 0 bis 50 Gew.-% faser- oder teilchenförmige Füllstoffe oder deren Mischungen.

Außerdem betrifft die Erfindung die Verwendung dieser thermoplastischen Formmassen zur Herstellung von Fasern, Folien und Formkörpern sowie die hierbei erhältlichen Formkörper aus den thermoplastischen Formmassen.

Thermoplastische Formmassen auf der Basis von Polycarbonaten und Styrol/Acrylnitril-Polymerisaten finden aufgrund ihres Eigenschaftsprofils in den verschiedensten Bereichen Verwendung, beispielsweise im Automobilbau, im Bausektor, für Büromaschinen sowie in elektrischen Geräten und Haushaltsgeräten.

Thermoplastische Formmassen auf der Basis von Polycarbonaten, Polyolefinen und Pfropfcopolymerisaten auf Butadienbasis mit Copolymerisaten aus Styrol und Acrylnitril sind beispielsweise aus der DE-A 33 00 857 bekannt. Diese Mischungen weisen zwar eine hohe Zähigkeit auf, jedoch ist die Witterungsstabilität nicht zufriedenstellend.

In der EP-A 322 095 sind Blends aus Polyethylenterephthalat, Polycarbonat, Polyolefinen und gepfropften EPDM-Kautschuken beschrieben. Diese Blends weisen jedoch ebenso wie die in der NL-A 8 601 409 beschriebenen Mischungen aus Polycarbonaten und Phosphorsäure, gegebenenfalls mit Polyolefinen und Kautschuken, Nachteile bei den mechanischen Eigenschaften auf.

Der Zusatz von Polyolefinen zu Polycarbonaten ist z.B. aus der US-A 4 504 626 bekannt. Hierdurch wurden Produkte mit zufriedenstellender Spannungsrißbeständigkeit und gegenüber reinem Polycarbonat verbesserter Schlagzähigkeit erhalten, jedoch läßt die multiaxiale Zähigkeit zu wünschen übrig.

Aufgabe der vorliegenden Erfindung war es daher, thermoplastische Formmassen zur Verfügung zu stellen, die die genannten Nachteile nicht aufweisen.

Die Aufgabe wird erfindungsgemäß gelöst durch die eingangs definierten thermoplastischen Formmassen auf der Basis von Polycarbonaten, Styrol/Acrylnitril-Polymerisaten und Polyolefinen. Außerdem wurde die Verwendung dieser thermoplastischen Formmassen zur Herstellung von Fasern, Folien und Formkörpern sowie die hierbei erhältlichen Formkörper aus den thermoplastischen Formmassen gefunden.

Als Komponente A) enthalten die erfindungsgemäßen thermoplastischen Formmassen 10 bis 88,9 Gew.-%, vorzugsweise 40 bis 75 Gew.-% mindestens eines Polycarbonats.

Geeignete Polycarbonate sind beispielsweise solche auf Basis von Diphenolen der allgemeinen Formel II

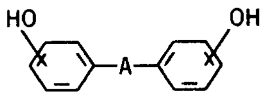

II

worin A eine Einfachbindung, eine $C_1$- bis $C_3$-Alkylen-, eine $C_2$- bis $C_3$-Alkyliden-, eine $C_3$- bis $C_6$-Cycloalkylidengruppe, sowie -S- oder -$SO_2$- bedeutet.

Bevorzugte Diphenole der Formel II sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Sowohl Homopolycarbonate als auch Copolycarbonate sind als Komponente A) geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Weiterhin können die als Komponente A) geeigneten Polycarbonate an den aromatischen Einheiten ein- bis dreifach mit Halogenatomen, bevorzugt mit Chlor und/oder Brom, substituiert sein. Besonders bevorzugt sind jedoch halogenfreie Verbindungen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten Mw (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pydridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782.)

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Weitere geeignete Polycarbonate sind solche auf Basis von Hydrochinon oder Resorcin.

Als Komponente B) enthalten die erfindungsgemäßen thermoplastischen Formmassen 10 bis 50 Gew.-%, vorzugsweise 10 bis 25 Gew.-% mindestens eines Pfropfpolymerisats, aufgebaut aus

$b_1$) 40 bis 80 Gew.-%, vorzugsweise 50 bis 70 Gew.-% einer Pfropfgrundlage aus einem kautschukelastischen Polymeren auf Basis von Alkylacrylaten mit 1 bis 8 C-Atomen im Alkylrest und mit einer Glasübergangstemperatur von unter 10 °C

$b_2$) 20 bis 60 Gew.-%, vorzugsweise 30 bis 50 Gew.-% einer Pfropfauflage aus

$b_{21}$) 50 bis 95 Gew.-%, bevorzugt 60 bis 80 Gew.-% Styrol oder substituierten Styrolen der allgemeinen Formel I oder $C_1$- bis $C_8$-Alkyl(meth)acrylate oder deren Mischungen

$b_{22}$) 5 bis 50 Gew.-%, vorzugsweise 20 bis 40 Gew.-% Acrylnitril, Methacrylnitril, $C_1$- bis $C_8$-Alkyl(meth)acrylate, Maleinsäureanhydrid, mit $C_1$- bis $C_8$-Alkyl- oder $C_6$- bis $C_{20}$-Arylgruppen N-substituierte Maleinsäureimide oder deren Mischungen.

Für die Pfropfgrundlage $b_1$) kommen Polymerisate in Frage, deren Glasübergangstemperatur unterhalb von 10 °C, vorzugsweise unterhalb von 0 °C liegt. Dies sind z.B. Elastomere auf der Basis von $C_1$- bis $C_8$-Alkylestern der Acrylsäure, die ggf. ebenfalls weitere Comonomere enthalten können.

Bevorzugt sind Pfropfgrundlagen $b_1$), die aufgebaut sind aus

$b_{11}$) 70 bis 99,9 Gew.-%, vorzugsweise 90 bis 99 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleiniges Alkylacrylat

$b_{12}$) 0 bis 30 Gew.-%, insbesondere 20 bis 30 Gew.-% eines weiteren copolymerisierbaren monoethylenisch ungesättigten Monomeren, wie Butadien, Isopren, Styrol, Acrylnitril, Methylmethacrylat und/oder Vinylmethylether

$b_{13}$) 0,1 bis 5 Gew.-%, vorzugsweise 1 bis 4 Gew.-% eines copolymerisierbaren, polyfunktionellen,

vorzugsweise bi- oder tri-funktionellen, die Vernetzung bewirkenden Monomeren.

Als solche bi- oder polyfunktionellen Vernetzungsmonomeren $b_{13}$) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanat. Als besonders günstiges Vernetzungsmonomeres hat sich der Acrylsäureester des Tricyclodecenylalkohols erwiesen (vgl. DE-A 12 60 135).

Diese Art von Pfropfgrundlagen ist an sich bekannt und in der Literatur beschrieben, beispielsweise in der DE-A 31 49 358.

Von den Pfropfauflagen $b_2$) sind diejenigen bevorzugt, in denen $b_{21}$) Styrol oder $\alpha$-Methylstyrol bedeutet. Bei der Komponente $b_{22}$) haben sich neben Acrylnitril und Maleinsäureanhydrid besonders Methylmethacrylat sowie die mit $C_1$- bis $C_4$-Alkylgruppen oder mit $C_6$- bis $C_{10}$-Arylgruppen, insbesondere mit Phenyl, N-substituierten Maleinsäureimide als geeignet erwiesen. Als bevorzugte Monomeren-Gemische werden vor allem Styrol und Acrylnitril, $\alpha$-Methylstyrol und Acrylnitril, Styrol, Acrylnitril und Methylmethacrylat, Styrol und Maleinsäureanhydrid eingesetzt. Die Pfropfauflagen sind erhältlich durch Copolymerisation der Komponenten $b_{21}$) und $b_{22}$).

Ist die Pfropfgrundlage $b_1$) der Pfropfpolymerisate B) aus den Komponenten $b_{11}$), gegebenenfalls $b_{12}$) und $b_{13}$) aufgebaut, so spricht man von ASA-Kautschuken. Ihre Herstellung ist an sich bekannt und beispielsweise in der DE-A 28 26 925, der DE-A 31 49 358 und der DE-A 34 14 118 beschrieben.

Die Herstellung des Pfropfmischpolymerisats B) kann beispielsweise nach der in der DE-PS 12 60 135 beschriebenen Methode erfolgen.

Der Aufbau der Pfropfauflage (Pfropfhülle) des Pfropfmischpolymerisats kann ein- oder zweistufig erfolgen.

Im Falle des einstufigen Aufbaues der Pfropfhülle wird ein Gemisch der Monomeren $b_{21}$) und $b_{22}$) in dem gewünschten Gew.-Verhältnis im Bereich von 95:5 bis 50:50, vorzugsweise von 90:10 bis 65:35 in Gegenwart des Elastomeren $b_1$, in an sich bekannter Weise (vgl. z.B. DE-OS 28 26 925), vorzugsweise in Emulsion, polymerisiert.

Im Falle eines zweistufigen Aufbaus der Pfropfhülle $b_2$) macht die 1. Stufe im allgemeinen 20 bis 70 Gew.-%, vorzugsweise 25 bis 50 Gew.-%, bezogen auf $b_2$), aus. Zu ihrer Herstellung werden vorzugsweise nur monoethylenisch-ungesättigte aromatische Kohlenwasserstoffe ($b_{21}$) verwendet.

Die 2. Stufe der Pfropfhülle macht im allgemeinen 30 bis 80 Gew.-%, insbesondere 50 bis 75 Gew.-%, jeweils bezogen auf $b_2$), aus. Zu ihrer Herstellung werden Mischungen aus den genannten monoethylenisch ungesättigten aromatischen Kohlenwasserstoffen $b_{21}$) und monoethylenisch ungesättigten Monomeren $b_{22}$) im Gewichtsverhältnis $b_{21}$)/$b_{22}$) von im allgemeinen 90:10 bis 60:40, insbesondere 80:20 bis 70:30 angewendet.

Die Bedingungen der Pfropfmischpolymerisation werden vorzugsweise so gewählt, daß Teilchengrößen von 50 bis 700 nm ($d_{50}$-Wert d. integralen Massenverteilung) resultieren. Maßnahmen hierzu sind bekannt und z.B. in der DE-OS 28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfmischpolymerisate mit unterschiedlicher Teilchengröße zu verwenden.

Um dies zu erreichen, werden die Teilchen des Kautschuks in bekannter Weise, z.B. durch Agglomeration, vergrößert, so daß der Latex bimodal (50 bis 180 nm und 200 bis 700 nm) aufgebaut ist.

In einer bevorzugten Ausführungsform wird eine Mischung aus zwei Pfropfmischpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt.

Der chemische Aufbau der beiden Pfropfmischpolymerisate ist vorzugsweise derselbe, obwohl die Hülle des grobteiligen Pfropfmischpolymerisates insbesondere auch zweistufig aufgebaut werden kann.

Mischungen aus der Komponente A) und B), wobei letztere ein grob- und ein feinteiliges Pfropfmischpolymerisat aufweist, sind z.B. in der DE-OS 36 15 607 beschrieben. Mischungen aus der Komponente A und B, wobei letztere eine zweistufige Pfropfhülle aufweist, sind aus EP-A 111 260 bekannt.

Als Komponente C) enthalten die erfindungsgemäßen thermoplastischen Formmassen 1 bis 79,9 Gew.-%, vorzugsweise 10 bis 30 Gew.-% eines thermoplastischen Copolymerisats aus

$c_1$) 50 bis 95 Gew.-%, vorzugsweise 60 bis 80 Gew.-% Styrol oder substituierten Styrolen der allgemeinen Formel I oder $C_1$- bis $C_8$-Alkyl(meth)acrylate oder deren Mischungen

$c_2$) 5 bis 50 Gew.-%, vorzugsweise 20 bis 40 Gew.-% Acrylnitril, Methacrylnitril, $C_1$- bis $C_8$-Alkyl(meth)-acrylate, Maleinsäureanhydrid, mit $C_1$- bis $C_8$-Alkyl- oder $C_6$- bis $C_{20}$-Arylgruppen N-substituierte Maleinsäureimide oder deren Mischungen.

Die Copolymerisate C) sind harzartig, thermoplastisch und kautschukfrei. Besonders bevorzugte Copolymerisate C) sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid. Es können auch mehrere der beschriebenen Copolymere gleichzeitig eingesetzt werden.

Solche Copolymerisate entstehen häufig bei der Pfropfpolymerisation zur Herstellung der Komponente B) als Nebenprodukte, besonders dann, wenn große Mengen Monomere auf kleine Mengen Kautschuk gepfropft werden.

Die Copolymerisate C) sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 auf, dies entspricht mittleren Molekulargewichten $\overline{M}_w$ - (Gewichtsmittelwert) von 40 000 bis 2 000 000.

Die als Komponente D) eingesetzten Polyolefine sind in den erfindungsgemäßen thermoplastischen Formmassen in einer Menge von 0,1 bis 40 Gew.-%, vorzugsweise 1 bis 10 Gew.-% vorhanden.

Geeignete Polyolefine sind beispielsweise Homo- und/oder Copolymerisate des Ethylens, Propylens oder anderen endständigen Alkenen. In Frage kommen z.B. Polyethylene, hergestellt nach Hoch-, Mittel- oder Niederdruckverfahren mit Dichten zwischen 0,91 und 0,97 g/cm$^3$, oder Copolymerisate von Ethylen z.B. mit Vinylestern wie Vinylacetat oder Vinylpropionat, mit Acrylestern oder mit Propylen. Der Comonomerengehalt der Ethylencopolymerisate liegt zwischen 1 und 65 Gew.-%, vorzugsweise zwischen 10 und 45 Gew.-%. Der Schmelzflußindex (Melt Flow Index) der Ethylenpolymerisate kann in einem weiten Bereich schwanken und beträgt vorzugsweise 0,5 bis 40 g/10 min (MFI 190 °C/2,16 kg Belastung). Ein bevorzugtes Polyolefin ist Polyethylen hoher Dichte (Bereich 0,94 bis 0,97 g/cm$^3$) hergestellt nach dem sog. Phillips-Verfahren (Mitteldruckverfahren). Ein anderes bevorzugtes Polyolefin ist lineares Polyethylen niedriger Dichte (Bereich 0,91 bis 0,94 g/cm$^3$) hergestellt nach dem Gasphasenverfahren. Genannt werden soll auch füllstoffhaltiges Polyethylen, bevorzugt wird in diesem Fall Calciumcarbonat als Füllstoff, der in Form von Kreide vorliegt und besonders bevorzugt einen mittleren Teilchendurchmesser von 0,1 bis 20 µm aufweist.

Genannt sei weiterhin Polypropylen, das z.B. nach dem sogenannten Gasphasenverfahren unter Verwendung von Ziegler-Natta-Katalysatoren hergestellt werden kann und einen Schmelzflußindex (MFI 190 °C/5 kg Belastung) von 0, 1 bis 90 g/10 min aufweist. Außerdem sind Propylencopolymerisate zu nennen, die ihrerseits bevorzugt aus 20 bis 65 Gew.-% Propylenhomopolymerisat und 35 bis 80 Gew.-% statistischem Propylencopolymerisat mit einpolymerisierten $C_2$- bis $C_{10}$-Alk-1-enen bestehen. Bevorzugt wird dabei ein Propylencopolymerisat verwendet, welches neben 35 bis 65 Gew.-% Propylenhomopolymerisat nach 35 bis 65 Gew.-% statistisches Propylencopolymerisat aufweist. Das statistische Propylencopolymerisat enthält einpolymerisierte $C_2$- bis $C_{10}$-Alkene, beispielsweise Ethylen, But-1-en, Pent-1-en, Hex-1-en, Hept-1-en oder Oct-1-en oder Gemische dieser Comonomeren, wobei bevorzugt Ethylen oder But-1-en verwendet werden. Die Menge an Comonomeren im statistischen Propylencopolymerisat sollte dabei so bemessen werden, daß der Comonomerenanteil am Propylencopolymerisat 15 Gew.-%, vorzugsweise 20 Gew.-%, nicht unterschreitet.

Die Herstellung dieser Propylencopolymerisate erfolgt durch Polymerisation mit Hilfe von Ziegler-Natta-Katalysatoren, vorzugsweise in der Gasphase mit den in der Technik gebräuchlichen Polymerisationsreaktoren. Allgemein sind Verfahren zur Herstellung von Polyolefinen bekannt und werden z.B. in "Ullmanns Encyklopädie der technischen Chemie", 4. Auflage, Band 19, Seiten 167 bis 226 beschrieben.

Bevorzugt sind weiterhin Copolymerisate der Olefine mit polaren Monomeren wie säure- oder anhydridgruppenhaltige Monomeren. Insbesondere sind hier Acrylsäure und Methacrylsäure zu nennen, aber auch (Meth)acrylate, (Meth)acrylamide, (Meth)acrylnitril sowie auch basenhaltige Monomeren wie N,N-Dimethylaminoethylacrylat. Der Anteil dieser genannten Comonomere liegt i.a. zwischen 0 und 50 Gew.-%, bezogen auf das Gesamtgewicht der Komponente D).

Die Herstellung solcher Copolymerisate ist dem Fachmann an sich bekannt.

Als Komponente E) können die erfindungsgemäßen thermoplastischen Formmassen bis zu 50 Gew.-%, insbesondere 0,1 bis 20 Gew.-% faser- oder teilchenförmige Füllstoffe oder deren Mischungen enthalten. Dabei handelt es sich vorzugsweise um kommerziell erhältliche Produkte. Verarbeitungshilfsmittel und Stabilisatoren wie UV-Stabilisatoren, Schmiermittel und Antistatika werden üblicherweise in Mengen von 0,01 bis 5 Gew.-% verwendet, Verstärkungsmittel wie Kohlenstoffasern und Glasfasern hingegen von 5 bis 40 Gew.-%.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen genannt. Insbesondere kommen Al-Flocken (K 102 der Fa. Transmet) für EMI-Zwecke (electro-magnetic interference) in Betracht; ferner Abmischen dieser Masse mit zusätzlichen Kohlenstoffasern, Leitfähigkeitsruß oder nickelbeschichteten C-Fasern.

Die erfindungsgemäßen Formmassen können ferner weitere Zusatzstoffe enthalten, die für Polycarbonate, SAN-Polymerisate und Pfropfmischpolymerisate auf Basis von ASA oder deren Mischungen typisch und gebräuchlich sind. Als solche Zusatzstoffe seien beispielsweise genannt: Farbstoffe, Pigmente, Antistatika, Antioxidanien und insbesondere die Schmiermittel, die für die Weiterverarbeitung der Formmasse, z.B. bei der Herstellung von Formkörpern bzw. Formteilen erforderlich sind.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A) bis D) und die Zusätze der Gruppe E) sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten A), B), C), D) und gegebenenfalls E) kann nach allen bekannten Methoden erfolgen. Vorzugsweise geschieht jedoch das Mischen der Komponenten A), B), C), D) und gegebenenfalls E) bei Temperaturen von 200 bis 320 °C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind.

Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindungsgemäßen thermoplastischen Formmassen weisen vor allem eine hohe Zähigkeit, gute Chemikalien- und Witterungsstabilität sowie gute Fließfähigkeit auf.

## Beispiele

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

Es wurden folgende Komponenten eingesetzt:

A) Ein handelsübliches Polycarbonat auf der Basis von Bisphenol A mit einer relativen Lösungsviskosität $\eta_{rel}$ von 1,3 ml/g, gemessen an einer 0,5 gew.-%igen Lösung in Methylenchlorid bei 23 °C.

B1) Ein feinteiliges Pfropfmischpolymerisat, hergestellt aus

$\beta_1$) 16 g Butylacrylat und 0,4 g Tricyclodecenylacrylat, die in 150 g Wasser unter Zusatz von 1 g des Natriumsalzes einer $C_{12}$-$C_{18}$-Paraffinsulfonsäure, 0,3 g Kaliumpersulfat, 0,3 g Natriumhydrogencarbonat und 0,15 g Natriumpyrophosphat unter Rühren auf 60 ° C erwärmt wurden. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).

$\beta_2$) 150 g des nach $\beta_1$) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65 ° C erhitzt. Nach Beendigung der Pfropfmischpolymerisation wurde das Polymerisationsprodukt mittels Calciumchloridlösung bei 95 ° C aus der Dispersion gefällt, mit Wasser gewaschen und im warmen Luftstrom getrocknet. Der Pfropfgrad des Pfropfmischpolymerisats betrug 35 %, die Teilchengröße 91 nm.

B2) Ein grobteiliges Pfropfmischpolymerisat, das folgendermaßen hergestellt wurde:

$\beta_3$) Zu einer Vorlage aus 1,5 g des nach $\beta_1$) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer $C_{12}$-$C_{18}$-Paraffinsulfonsäure in 25 g Wasser bei 60 ° C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt, die Teilchengrößenverteilung war eng (Q = 0,1).

$\beta_4$) 150 g des nach $\beta_3$) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65 ° C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95 ° C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

C) Ein Copolymerisat aus Styrol und Acrylnitril im Gew.-Verhältnis 80:20 mit einer Viskositätszahl von 83 ml/g (gemessen an einer 0,5 gew.-%igen Lösung in Dimethylformamid bei 23 ° C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

D1) Ein Ethylen/Acrylsäure-Copolymerisat mit einem Gehalt an Acrylsäure von 8 Gew.-%, einem Schmelzindex MFI (190 ° C/2,16 kg Belastung) von 20 g/10 min und einer Dichte von 0,935 g/$cm^3$.

D2) Ein Polyethylen mit einem Schmelzindex MFI (190 ° C/2,16 kg Belastung) von 21 g/10 min und einer Dichte von 0,952 g/$cm^3$.

D3) Ein Polyethylen mit einem Schmelzindex MFI (190 ° C/2,16 kg Belastung) von 17 g/10 min und einer Dichte von 0,915 g/$cm^3$.

E) Ein hochmolekularer Mehrkomponentenester mit einer Viskosität von 110 bis 150 mPa•s bei 80 ° C (Loxiol® G 70 S der Fa. Henkel).

Beispiele 1 bis 9

Herstellung der thermoplastischen Formmassen

Die Komponenten A) bis E) wurden auf einem Zweiwellenextruder (ZSK 30 der Fa. Werner & Pfleiderer) bei 260 ° C gemischt, als Strang ausgetragen, gekühlt und granuliert.

Vergleichsbeispiele V1 bis V3

Es wurde wie in den Biespielen 1 bis 9 gearbeitet, jedoch ohne Zusatz eines Polyolefins (Komponente D).

Die Zusammensetzungen und Eigenschaften der thermoplastischen Formmassen sind in der Tabelle zusammengestellt.

Der Schmelzindex MFI wurde nach DIN 53 735 bei 260 ° C und 5 kg Belastung bestimmt. Die

Bestimmung der Kerbschlagzähigkeit $a_k$ erfolgte nach DIN 53 453 an Normkleinstäben der Abmessungen 50 mm x 6 mm x 4 mm (Spritztemperatur: 260 ° C) bei 0 ° C und -40 ° C.

Tabelle

| Bsp. | Komponenten [Gew.-%] A | B1 | B2 | C | D1 | D2 | D3 | E | MFI [g/10 min] | $a_k$ (bei 0°C) [kJ/m2] | $a_k$ (bei -40°C) [kJ/m2] |
|---|---|---|---|---|---|---|---|---|---|---|---|
| 1 | 57,5 | 10 | 10 | 20 | 2 | - | - | 0,5 | 12 | 19 | 3 |
| 2 | 55,5 | 10 | 10 | 20 | 4 | - | - | 0,5 | 15 | 20 | 3 |
| 3 | 51,5 | 10 | 10 | 20 | 8 | - | - | 0,5 | 19 | 23 | 4 |
| 4 | 57,5 | 10 | 10 | 20 | - | 2 | - | 0,5 | 13 | 21 | 5 |
| 5 | 55,5 | 10 | 10 | 20 | - | 4 | - | 0,5 | 18 | 22 | 4 |
| 6 | 51,5 | 10 | 10 | 20 | - | 8 | - | 0,5 | 21 | 33 | 4 |
| 7 | 57,5 | 10 | 10 | 20 | - | - | 2 | 0,5 | 13 | 19 | 4 |
| 8 | 55,5 | 10 | 10 | 20 | - | - | 4 | 0,5 | 19 | 26 | 4 |
| 9 | 51,5 | 10 | 10 | 20 | - | - | 8 | 0,5 | 22 | 20 | 4 |
| V1 | 59,5 | 10 | 10 | 20 | - | - | - | 0,5 | 10 | 19 | 3 |
| V2 | 59,5 | 20 | - | 20 | - | - | - | 0,5 | 9 | 15 | 3 |
| V3 | 59,5 | - | 20 | 20 | - | - | - | 0,5 | 10 | 17 | 3 |

## Patentansprüche

**1.** Thermoplastische Formmassen, enthaltend als wesentliche Komponenten

A) 10 bis 88,9 Gew.-% mindestens eines Polycarbonats

B) 10 bis 50 Gew.-% mindestens eines Pfropfpolymerisats, aufgebaut aus

$b_1$) 40 bis 80 Gew.-% einer Pfropfgrundlage aus einem kautschukelastischen Polymeren auf Basis von Alkylacrylaten mit 1 bis 8 C-Atomen im Alkylrest und mit einer Glasübergangstemperatur von unter 10°C

$b_2$) 20 bis 60 Gew.-% einer Pfropfauflage aus

$b_{21}$) 50 bis 95 Gew.-% Styrol oder substituierten Styrolen der allgemeinen Formel I

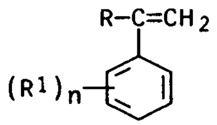

I

wobei R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat oder $C_1$- bis $C_8$-Alkyl(meth)-acrylate oder deren Mischungen und

$b_{22}$) 5 bis 50 Gew.-% Acrylnitril, Methacrylnitril, $C_1$- bis $C_8$-Alkyl(meth)acrylate, Maleinsäureanhydrid, mit $C_1$- bis $C_8$-Alkyl- oder $C_6$- bis $C_{20}$-Arylgruppen N-substituierte Maleinsäureimide oder deren Mischungen

C) 1 bis 79,9 Gew.-% eines thermoplastischen Copolymerisats aus

$c_1$) 50 bis 95 Gew.-% Styrol oder substituierten Styrolen der allgemeinen Formel I oder $C_1$- bis $C_8$-Alkyl(meth)acrylate oder deren Mischungen

$c_2$) 5 bis 50 Gew.-% Acrylnitril, Methacrylnitril, $C_1$-$C_8$-Alkyl(meth)acrylate, Maleinsäureanhdyrid, mit $C_1$- bis $C_8$-Alkyl- oder $C_6$- bis $C_{20}$-Arylgruppen N-substituierte Maleinsäureimide oder deren Mischungen

D) 0,1 bis 40 Gew.-% mindestens eines Polyolefins

E) 0 bis 50 Gew.-% faser- oder teilchenförmige Füllstoffe oder deren Mischungen.

**2.** Thermoplastische Formmassen nach Anspruch 1, dadurch gekennzeichnet, daß sie
die Komponente A) in einer Menge von 40 bis 75 Gew.-%,
die Komponente B) in einer Menge von 10 bis 25 Gew.-%,
die Komponente C) in einer Menge von 10 bis 30 Gew.-%,
die Komponente D) in einer Menge von 1 bis 10 Gew.-% und
die Komponente E) in einer Menge von 0,1 bis 20 Gew.-% enthalten.

**3.** Thermoplastische Formmassen nach den Ansprüchen 1 bis 2, dadurch gekennzeichnet, daß die Pfropfgrundlage $b_1$) aufgebaut ist aus

$b_{11}$) 70 bis 99,9 Gew.-% mindestens eines Alkylacrylats mit 1 bis 8 C-Atomen im Alkylrest

$b_{12}$) 0 bis 30 Gew.-% mindestens eines copolymerisierbaren monoethylenisch ungesättigten Monomeren und

$b_{13}$) 0,1 bis 5 Gew.-% eines copolymerisierbaren polyfunktionellen vernetzenden Monomeren.

**4.** Thermoplastische Formmassen nach den Ansprüchen 1 bis 3, dadurch gekennzeichnet, daß die Komponente B) aufgebaut ist aus

30 bis 70 Gew.-% eines grobteiligen Pfropfmischpolymerisats, das eine mittlere Teilchengröße von 200 bis 700 nm ($d_{50}$-Wert der integralen Masseverteilung) aufweist und 70 bis 30 Gew.-% eines feinteiligen Pfropfmischpolymerisats, das eine mittlere Teilchengröße von 50 bis 180 nm ($d_{50}$-Wert der integralen Masseverteilung) aufweist.

**5.** Thermoplastische Formmassen nach den Ansprüchen 1 bis 4, dadurch gekennzeichnet, daß als Komponente D) Homo- oder Copolymerisate des Ethylens oder des Propylens oder deren Mischungen eingesetzt werden.

**6.** Thermoplastische Formmassen nach den Ansprüchen 1 bis 5, dadurch gekennzeichnet, daß als

Komponente D) mindestens ein Copolymerisat verwendet wird, welches polare Monomereinheiten aufweist.

7. Thermoplastische Formmassen nach den Ansprüchen 1 bis 6, dadurch gekennzeichnet, daß als Komponente D) mindestens ein Copolymerisat verwendet wird, welches Monomereinheiten mit freien Säuregruppen oder Anhydridgruppen aufweist.

8. Verwendung der thermoplastischen Formmassen gemäß den Ansprüchen 1 bis 7 zur Herstellung von Fasern, Folien und Formkörpern.

9. Formkörper, erhältlich aus den thermoplastischen Formmassen gemäß den Ansprüchen 1 bis 7.

Europäisches Patentamt

# EUROPÄISCHER RECHERCHENBERICHT

Nummer der Anmeldung
EP 92 11 0019

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 230 914 (BASF AG)<br>* das ganze Dokument * | 1-9 | C08L69/00 //(C08L69/00, 51:04,25:12, 23:02) |
| A | EP-A-0 111 851 (GENERAL ELECTRIC COMPANY)<br>* Ansprüche 1-15 * | 1-3,5,6 | |
| A | EP-A-0 244 856 (BASF AG)<br>* Ansprüche 1-13 * | 1-4 | |
| A | EP-A-0 207 388 (BASF AG) | | |
| A | DE-A-3 202 477 (TEIJIN CHEMICALS LTD.) | | |
| A | EP-A-0 110 222 (GENERAL ELECTRIC COMPANY) | | |

RECHERCHIERTE SACHGEBIETE (Int. Cl.5 )

C08L

Der vorliegende Recherchenbericht wurde für alle Patentansprüche erstellt

| Recherchenort | Abschlußdatum der Recherche | Prüfer |
|---|---|---|
| DEN HAAG | 28 OKTOBER 1992 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)